(19) Europäisches Patentamt / European Patent Office / Office européen des brevets

(11) **EP 2 249 065 A1**

(12) **DEMANDE DE BREVET EUROPEEN**

(43) Date de publication:
**10.11.2010 Bulletin 2010/45**

(21) Numéro de dépôt: **10305427.6**

(22) Date de dépôt: **23.04.2010**

(51) Int Cl.:
*F16H 61/32* (2006.01)  *G05B 13/02* (2006.01)
*G05B 19/18* (2006.01)  *F16H 61/02* (2006.01)

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(30) Priorité: **07.05.2009 FR 0953046**

(71) Demandeur: **Renault S.A.S.
92100 Boulogne-Billancourt (FR)**

(72) Inventeur: **Negre, Edouard
78180 Montigny le Bretonneux (FR)**

(54) **Dispositif et procédé de commande d'un actionneur**

(57) Dispositif de commande d'un actionneur comprenant un moteur (1) relié à un arbre (2) supportant une entrée de progressivité (3) et un élément d'interface (5), caractérisé par le fait qu'il comprend un dispositif de détermination (20) d'une variable de rapport de vitesse, un moyen de comparaison de la variable de rapport de vitesse à au moins un seuil, un moyen de détermination de position de l'entrée de progressivité (3), un moyen de détermination de position de l'élément d'interface (5), un moyen de détermination du sens de déplacement et un moyen de mémorisation de la position déterminée en fonction du signal reçu du moyen de comparaison et du sens de déplacement,

## FIG.1c

# FIG.1d

**Description**

La présente invention concerne l'automatisme et la commande des actionneurs d'une transmission automatique.

Les boites de vitesses automatiques sont en plein essor grâce au développement des véhicule à propulsion hybride. Ces véhicules comprennent généralement une boite de vitesses automatisée afin d'être apte à optimiser les changements de vitesse en fonction des couples requis pour réduire la consommation de carburant ou d'énergie. De telles boites de vitesses permettent d'éviter que le conducteur effectue des choix de rapports inappropriés.

Certaines boites de vitesses automatisées permettent de réaliser le couplage entre un arbre primaire de transmission et un arbre secondaire, selon plusieurs rapports de démultiplication, au moyen de coupleurs à friction.

Le coupleur, également appelé élément de couplage, peut être de type conique auto-assisté ou multi-disques. Dans tous les cas, l'élément de couplage est piloté par un effort de serrage. Le couple transmis par le coupleur, est une fonction de cet effort de serrage. L'effort en lui-même est réalisé au moyen d'un actionneur électromécanique comportant une raideur interne, assurant la progressivité de l'effort de commande du coupleur. Les demandes de brevet français FR2813935, FR2820484 et FR2833331 décrivent le principe de tels actionneurs.

Les demandes FR2861153, FR2861154, US4449416, US4498350 et WO0102758 décrivent des actionneurs changement de rapport de boite de vitesse automatique comprenant une raideur interne pour la progressivité de l'effort de commande,

Dans un contexte d'utilisation essentiellement intra-urbaine de tels véhicules, les changements de vitesse sont répétés, menant à une usure parfois prématurée des actionneurs compris dans la boite de vitesses, en dépit de l'utilisation de matériaux plus résistants issus de la recherche.

Malgré l'usure, il est nécessaire de disposer d'une bonne connaissance de la position des différents actionneurs afin d'assurer une commande appropriée de leur engagement ou de leur retrait.

L'état de l'art antérieur décrit la structure mécanique des actionneurs. Cependant, le problème du contrôle des actionneurs vis-à-vis de leur usure n'est pas abordé.

Il existe donc un besoin d'un procédé de commande d'un actionneur apte à prendre en compte l'usure dudit actionneur afin d'en assurer un fonctionnement optimal.

Il existe également un besoin pour un dispositif de commande d'un actionneur apte à prendre en compte l'usure dudit actionneur afin d'en assurer un fonctionnement optimal.

Selon un aspect de l'invention, on définit un dispositif de commande d'un actionneur comprenant un moteur relié à un arbre supportant une entrée de progressivité et un élément d'interface. Le dispositif comprend un dispositif de détermination d'une variable de rapport de vitesse, un moyen de comparaison de la variable de rapport de vitesse à au moins un seuil, un moyen de détermination de position de l'entrée de progressivité, un moyen de détermination de position de l'élément d'interface, un moyen de détermination du sens de déplacement et un moyen de mémorisation de la position déterminée en fonction du signal reçu du moyen de comparaison et du sens de déplacement.

Le dispositif de commande peut comprendre un premier moyen de dérivation et de saturation recevant en entrée un signal provenant du moyen de détermination de position de l'entrée de progressivité, un deuxième moyen de dérivation et de saturation recevant en entrée un signal provenant du moyen de détermination de position de l'élément d'interface ci une deuxième moyen de filtrage au premier ordre apte à déterminer la variable de rapport de vitesse.

Le dispositif de commande peut comprendre une première mémoire, un moyen de filtrage au premier ordre connecté en sortie du premier moyen de dérivation et de saturation, et un comparateur apte à émettre une valeur logique en fonction de la comparaison entre la valeur mémorisée dans la première mémoire et une valeur issue de la sortie du moyen de filtrage au premier ordre.

Le dispositif de commande peut comprendre un moyen de comparaison conditionnelle et une deuxième mémoire, apte à émettre en sortie la valeur comprise dans la deuxième mémoire ou la valeur issue du deuxième moyen de filtrage au premier ordre en fonction de la valeur logique reçue du comparateur.

Le dispositif de commande peut comprendre un premier moyen de saturation, un deuxième moyen de saturation et une diviseur, le diviseur recevant sur une première entrée un signal transitant par le premier moyen de saturation et provenant du premier moyen de dérivation et de saturation et sur une deuxième entrée un signal provenant du deuxième moyen de dérivation et de saturation, le diviseur émettant un signal de sortie fonction du rapport du deuxième signal d'entrée par le premier signal d'entrée, le signal de sortie étant émis à destination du deuxième moyen de filtrage au premier ordre en transitant par un deuxième moyen de saturation.

Le dispositif de comprendre peut comprendre un moyen de calcul apte à déterminer la valeur absolue du signal provenant du moyen de filtrage au premier ordre et apte à émettre un signal à destination du comparateur.

Selon un autre aspect de l'invention, on définit un procédé de commande d'un actionneur comprenant un moteur relié à un arbre supportant une entrée de progressivité et un élément d'interface. Le procédé comprend des étapes au cours desquelles:

on détermine un signal de position de l'entrée de progressivité,
on détermine un signal de position de l'élément d'interface,
on détermine le sens de déplacement,
on détermine si les positions courantes correspondent à une butée, et
un mémorise les positions courantes et le sens de déplacement.

On peut déterminer si les positions courantes correspondent à une butée en réalisant des étapes au cours desquelles :

on détermine la variable de rapport de vitesse, et

on détermine une valeur logique vraie si la variable de rapport de vitesse est supérieure à un seuil.
On peut changer de sens de déplacement si une position a été déterminée pour le sens de déplacement courant.
On peut déterminer an défaut de l'actionneur si aucune position de butée n'est déterminée après deux allers retours.
D'autres buts, caractéristiques et avantages apparaîtront à la lecture de la description suivante donnée uniquement en tant qu'exemple non limitatif et faite en référence aux dessins annexés sur lesquels :

- la figure la illustre les principaux éléments d'un actionneur ;
- les figures 1b à 1d illustrent les principales étapes de fonctionnement d'un actionneur ;
- la figure 2 illustre les principales, étapes d'un procédé d'apprentissage des positions ; et
- la figure 3 illustre les principaux éléments d'un dispositif de commande de l'actionneur.

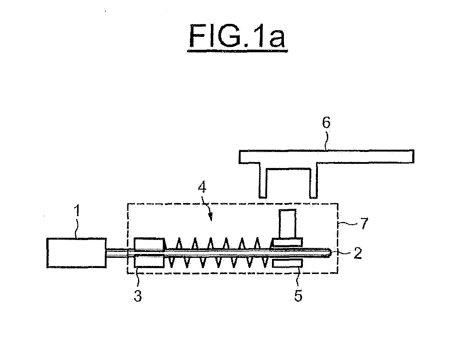

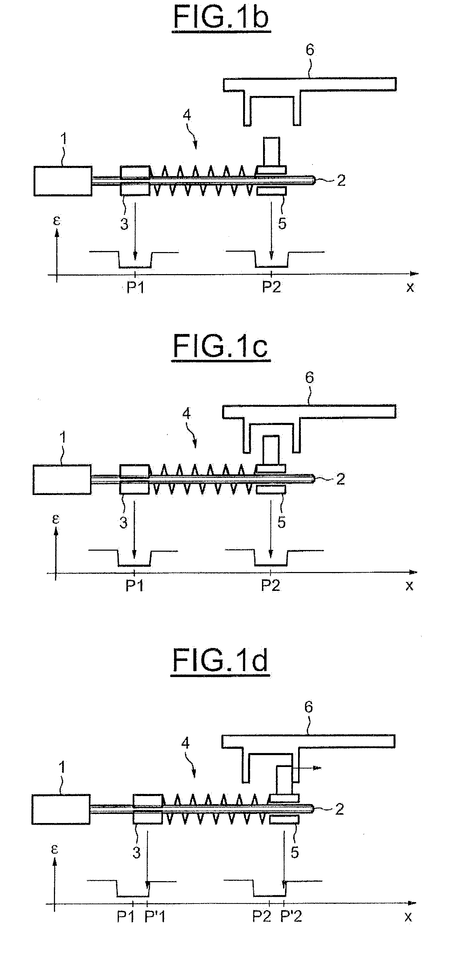

L'actionneur comprend un dispositif de progressivité. Il peut être d'architecture linéaire, ou d'architecture angulaire. Sur la figure la, on peut voir un actionneur d' efforts pour transmission. L'actionneur comprend un moteur 1 relié à un arbre 2 supportant une entrée de progressivité 3, une progressivité linéaire 4 et un élément d'interface 5 avec une charge 6. L'arbre 2, l'entrée de progressivité 3, la progressivité 4 et l'élément d'interface 5 forment un ensemble 7. L'actionneur est commandé au travers de la commande du moteur 1 qui transmet une force à la charge 6 par l'intermédiaire de l'ensemble 7. Le couple issu du moteur 1 est transformé en force par la combinaison de l'arbre 2 et de l'élément d'interface 5.
L'engagement et la transmission de l'effort sont réalisés selon la chronologie décrite sur les figures 1b à 1d. Sur la figure 1b, la charge et l'actionneur sont découplés. Sur la figure 1c, la charge est en position mais sans liaison avec l'actionneur. Cette position correspond à une position de neutre. La figure 1d illustre une position d'actionneur verrouillé, l'effort étant maximal.
Le dispositif de progressivité 4 est réalisé au moyen d'au moins un ressort. L'actionneur peut comprendre les moyens de mesure destinés à identifier les jeux mécaniques. Les moyens de mesure peuvent également être extérieurs à l'actionneur.
Les moyens de mesure doivent être aptes à fournir deux mesures de position. Les mesurer de position de deux éléments situés de part et d'autre de la progressivité 4. On petit voir une position P2 correspondant à la position du neutre de l'élément d'interface 5 et une position P1 correspondant à la position du neutre de l'entrée de progressivité 3.
Sur la figure 1d, on peut voir une position P'1 et une position P'2 correspondant à des positions de butée,
[0028] Les mesures de position peuvent être soit absolues, soit relatives. Dans le dernier cas, le dispositif d'apprentissage est apte à fournir une référence mécanique permettant d'établir une référence de position.

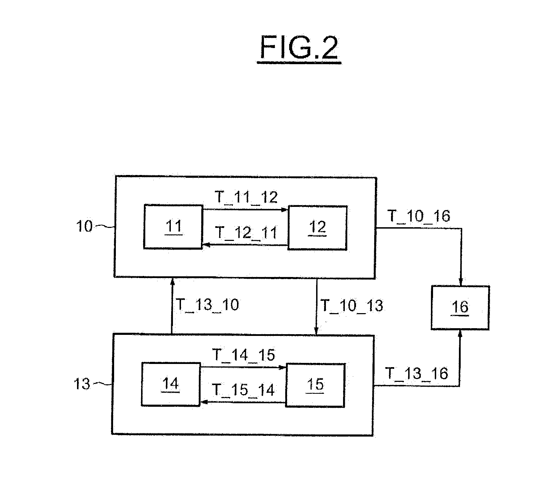

Sur la figure 2, on peut voir un procédé d'apprentissage des positions de neutre et de butée.
Pour chaque mesure, on va chercher à identifier son jeu mécanique, c'est-à-dire la zone dans laquelle l'actionneur est au neutre avec un effort de commande nul.
De part et d'autre de cette zone de jeu, se situent des positions de fin de dans lequel l'actionneur est verrouillé avec un effort de commande maximal. Pour déterminer la course, toute la course d'actionnement est balayée en surveillant les efforts de commande. Les variations d'effort permettent de déterminer les deux extrémités de la course totale.
Les jeux mécaniques à identifier peuvent être situés intégralement dans le dispositif de progressivité, partiellement dans ledit dispositif ou complètement à l'extérieur du dispositif de progressivité.
Lors de l'étape 10, on recherche une position de référence dans le sens positif. Pour cela, on déclenche un déplacement de l'actionneur à vitesse constante dans le sens positif. Pour déterminer la position de référence dans le sens positif, l'étape 10 comprend deux étapes 11 et 12. Dans l'étape 11, on recherche une extrémité de la zone de jeu mécanique dans le sens positif. Lors de l'étape on valide la position de fin de jeu déterminée lors de l'étape 11. La position de fin de jeu est alors mémorisée. Puis on recherche la position de fin de course dans le sens positif.
Lors de l'étape 13, on recherche une extrémité de la zone de jeu mécanique dans le sens négatif. Pour cela, on déclenche un déplacement de à vitesse constante le sens négatif. Pour déterminer la position de référence dans le sens négatif, l'étape 10 comprend deux étapes 14 et 15. Dans l'étape 14, on recherche une extrémité de la zone de jeu mécanique dans le sens négatif. Lors de l'étape 15, on valide la position de fin de jeu déterminée lors de l'étape 14. La position de fin de jeu est alors mémorisée. Puis on recherche la position de fin de course dans le sens négatif.

Lors de l'étape 16, on sort du procédé d'apprentissage.

Le procédé d'apprentissage débute indifféremment par l'étape 10 ou l'étape 13.

Plusieurs transitions sont possibles entre les différentes étapes afin que toutes les positions soient détectées et mémorisées. Certaines transitions sont régies par un ensemble de conditions, tandis que certaines transitions sont toujours possibles.

Il est possible de transiter de l'étape 11 à l'étape 12 par la transition T_11_12 si une position de fin de jeu dans le sens positif a été détectée.

Il est toujours possible de transiter de l'étape 12 à l'étape 11 par la transition T_12_11.

Il est possible de transiter de l'étape 14 à l'étape 15 par la transition T_14_15 si une position de fin de jeu dans le sens négatif a été détectée.

Il est toujours possible de transiter de l'étape 15 à l'étape 14 par la transition T_15_14.

If est possible de transiter de l'étape 10 à l'étape 13 par la transition T_10_13 si on a détecté une position de fin de course dans le sens positif et si on n'a pas mémorisé une position de fin de jeu dans le sens négatif.

Il est possible de transiter de l'étape 13 à l'étape 10 par la transition T_13_10 si on a détecté une position de fin de course dans le sens négatif et si on n'a pas mémorisé une position de fin de jeu dans le sens positif.

Il est possible de transiter de l'étape 10 à l'étape 16 par la transition T_10_16 si on a détecté une position de fin de course dans le sens positif et si on a mémorisé une position de fin de jeu dans le sens négatif.

Il est possible de transiter de l'étape 13 à l'étape 16 par la transition T_13_16 si on a détecté une position de fin de course dans le sens négatif et si on a mémorisé une position de fin de jeu dans le sens positif.

En d'autres termes, ce procédé permet de réaliser un balayage aller/retour ou aller/retour/aller de sorte que les deux positions de fin de jeu soient détectées et mémorisées.

Un défaut sera diagnostiqué si après deux mouvements complets, un mouvement complet correspondant à un aller-retour, des positions de fin de jeu n'ont pas été détectées.

Les positions de fin de course sont détectées par comparaison d'une estimation de l'effort développé par l'actionneur à des seuils. L'effort de l'actionneur peut notamment être déterminé à partir d'une mesure du courant d'alimentation d'un pont de puissance.

Les graphes présents en partie basse des figures 1b à 1d illustrent l'évolution de l'effort produit par le moteur selon que l'élément d'interface 5 et l'entrée de progressivité 3 se trouvent dans une position de neutre ou en butée. L'effort est faible en position neutre et plus important en butée. L'effort peut être détecté par différentes méthodes, notamment en détectant la hausse de puissance requise par le moteur.

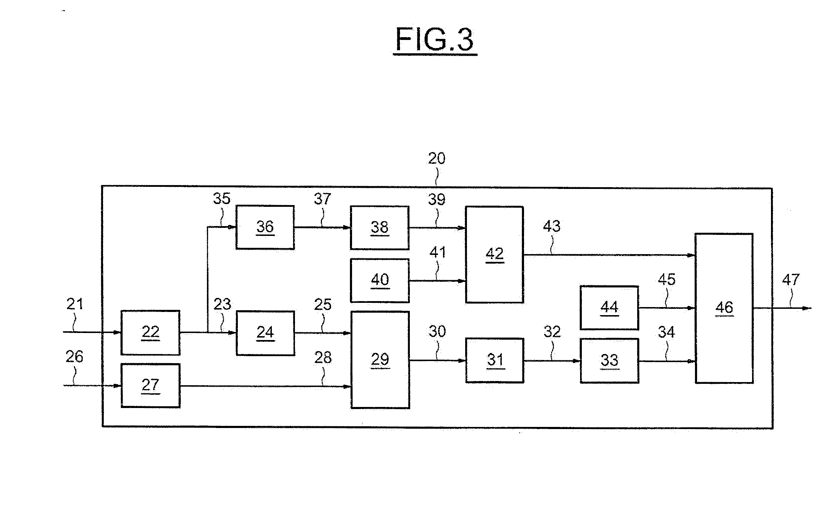

Les positions de fin de jeu sont détectées par comparaison d'une variable dépendant de la position de l'entrée de progressivité 3 et de la position de l'élément d'interface 5 à des seuils. Un dispositif de détermination 20 illustré sur la figure 3 permet de déterminer une variable de rapport de vitesse, notée d_p_rat, permettant de déterminer si les positions courantes correspondent à des positions de fin de jeu.

Le dispositif 20 de détermination de la variable de rapport de vitesse comprend au moins deux entrées numérotées 21 et 26 et au moins une sortie numérotée 47.

L'entrée 21 est reliée à un premier moyen 22 de dérivation et de saturation. Le premier moyen 22 de dérivation et de saturation est lui-même relié à un premier moyen 24 de saturation par une connexion 23 et à un premier moyen 36 de filtrage au premier ordre par une connexion 35. Par ailleurs, l'entrée 26 est reliée à un deuxième moyen 27 de dérivation et de saturation. Un diviseur 29 est relié en entrée par une connexion 25 au premier moyen 24 de saturation et par une connexion 28 au deuxième moyen 27 de dérivation et de saturation. Le diviseur 29 est relié en sortie à un deuxième moyen 31 de saturation, lui-même relié à un deuxième moyen 33 de filtrage au premier ordre par une connexion 32.

Parallèlement, le premier moyen 36 de filtrage au premier ordre est relié en sortie à un moyen de calcul 38 par une connexion 37. Un comparateur 42 est relié en entrée par une connexion 39 au moyen de calcul 38 et par une connexion 41 à une première mémoire 40.

Un moyen 46 de comparaison conditionnelle est relié en entrée par une connexion 45 à une deuxième mémoire 44, au comparateur 42 par une connexion 43 et au deuxième moyen 33 de filtrage au premier ordre par une connexion 34. Le moyen 46 de comparaison conditionnelle est relié en sortie à la connexion 47.

Le premier moyen 22 de dérivation et de saturation et le deuxième moyen 27 de dérivation et de saturation réalisent une dérivée filtrée discrète et saturée du signal reçu en entrée, respectivement les signaux p1 et p2. La dérivée filtrée discrète et saturée est réalisée en deux étapes. Une première étape est réalisée par la méthode de la discrétisation d'Euler appliquée à la fonction H(p) suivante :

$$H(p) = \frac{p}{1 + \tau \cdot p}$$

dans laquelle :

p représente la variable de Laplace, et
$\tau$ représente une constante de temps servant de variable de paramétrage.

On peut alors écrire la forme d'état suivante :

$$\begin{cases} \dot{x} = \dfrac{u - x}{\tau} \\ y = \dfrac{u - x}{\tau} \end{cases}$$

dans laquelle :

u représente le signal à discrétiser,
x représente la variable d'état, et
y représente la dérivée filtrée correspondant au signal u à discrétiser.

La discrétisation d'Euler permet d'obtenir l'équation suivante pour le cycle k.

$$\begin{cases} x(k+1) = e^{-T/\tau} \cdot x(k) + (1 - e^{-T/\tau}) \cdot u(k) \\ y(k) = u(k) - x(k) \cdot \dfrac{1}{\tau} \end{cases}$$

dans lequel T est la période d'échantillonnage.

Une deuxième étape est réalisée en saturant les valeurs obtenues à la première étape.

Les valeurs de la dérivée filtrée sont saturées entre les valeurs $y_{min}$ et $y_{max}$. On choisira de préférence $y_{min}$-$y_{max}$. Dans le cas général, on obtient le système suivant :

$$\begin{cases} z(k) = \max[\min[u(k) - x(k), y_{max} \cdot \tau], y_{min} \cdot \tau] \\ x(k+1) = u(k) - e^{-T/\tau} \cdot z(k) \\ y(k) = z(k) \cdot \tau^{-1} \end{cases}$$

dans lequel z est une deuxième variable intermédiaire d'état.

L'initialisation du système est réalisée en posant x(0) = u(0)-$\tau \cdot y_0$.

$y_0$ est la valeur souhaitée d'initialisation de la dérivée filtrée saturée.

Le cas particulier d'une initialisation de la dérivée filtrée à une valeur nulle implique donc que x(0) = u(0).

Cette saturation permet notamment d'éliminer le retard généré par le filtrage.

Le premier moyen 24 de saturation sature la valeur du signal reçu du premier moyen 22 de dérivation et de saturation afin que sa valeur soit supérieure à 0,2. Cette saturation a pour but d'empêcher une divergence de l'opération réalisée dans le diviseur 29.

Le diviseur 29 réalise le quotient du signal en sortie du deuxième moyen 27 de dérivation et de saturation par le signal en sortie du premier moyen 24 de saturation. Le deuxième moyen 31 de saturation une saturation du signal reçu du diviseur 29. Le deuxième moyen 33 de filtrage au premier ordre réalise un filtrage discret au premier ordre du signal reçu du deuxième moyen 31 de saturation.

La branche de circuit comprenant le premier moyen 36 de filtrage au premier ordre, le moyen de calcul 38 et le comparateur 42 permettent de fournir une valeur logique afin de commander le moyen 46 de comparaison conditionnelle. La valeur logique est déterminée en fonction de la valeur de la dérivée filtrée et saturée émise en sortie du premier moyen 22 de dérivation et de saturation et utilisée en tant que dénominateur dans l'évaluation du quotient effectuée dans le diviseur 29. Ainsi, quelque soit le résultat déterminé par le diviseur 29, seule une valeur cohérente du dénominateur permet d'émettre une valeur non nulle de d_p_rat en sortie du moyen 46 de comparaison conditionnelle.

Au sein de cette branche de circuit, le premier moyen 36 de filtrage au premier ordre réalise un filtrage discret au premier ordre du signal reçu du premier moyen 22 de dérivation et de saturation. Le moyen de calcul 38 émet en sortie un signal dont la valeur est égale à la valeur absolue de la valeur du signal reçu du premier moyen 36 de filtrage au premier ordre. La première mémoire 40 comprend une valeur de seuil bas, notée d psn thd permettant de jauger la cohérence de la valeur reçue du moyen de calcul 38. Cette valeur est par exemple égale à la valeur utilisée pour la saturation dans le premier moyen 24 de saturation. Le comparateur 42 réalise une comparaison entre les signaux reçues du moyen de calcul 38 et du première mémoire 40, et émet en sortie une valeur logique égale à l'unité si la valeur du signal reçu du premier moyen 36 de filtrage au premier ordre est supérieure à la valeur du signal de seuil reçu du première mémoire 40. Sinon, la valeur émise est nulle. Dans le cas du signal en sortie du comparateur 42, les valeurs unité ci nulle peuvent être remplacées par des arguments vrai ou faux reflétant la vérification des conditions booléennes appliquées dans le comparateur 42.

Le moyen 46 de comparaison conditionnelle émet par la sortie 47, une valeur nulle mémorisée dans le deuxième mémoire 44 si la valeur reçue du comparateur 42 est nulle, Le moyen 46 de comparaison conditionnelle, émet par la sortie 47 la valeur reçue du deuxième moyen 33 de filtrage au premier ordre si la valeur reçue du comparateur 42 est égale à l'unité.

Suivant la valeur prise par la variable d_p_rat, on détermine si la position courant représente une position de fin de jeu. Lorsque la variable d_p_rat prend une valeur voisins de l'unité, on considère que la position correspondante fait partie de la zone de jeu car les deux éléments dont la position est mesurée se déplacent simultanément. L'effort de contrainte de la progressivité ne varie pas. Lorsque la variable d_p_rat prend une valeur voisine de zéro, on considère que la position correspondante est une position de butée car seul l'élément dont la position est mesurée et qui est située en amont de la progressivité se déplace L'effort de contrainte de la progressivité varie. La position correspondante ne fait donc pas partie de la zone de jeu.

La défection de l'entrée ou de la sortie d'une zone de course utile est donc réalisée au moyen de la détection du franchissement de seuils par la variable d_p_rat.

La détection de la fin d'une zone de jeu consiste à déterminer, lors des apprentissages, la course de la partie mécanique en amont de la progressivité correspondant à la charge de l'actionneur et des efforts suffisants correspondants. Une telle détection permet d'améliorer la fiabilité du système d'un point de vue thermique, de consommation électrique, de durabilité et fiabilité. Ceci est réalisé en détectant un seuil d'effort de charge. Pour cela, on peut procéder à une mesure directe de l'effort produit, par une mesure du courant électrique.

On peut également, utiliser une déformation de la raideur. Cependant, une telle détermination est rendue difficile les mesures de position réalisées sans références. On distingue alors deux cas.

Si lors du déplacement en cours, une détection de fin de zone, de jeu a été réalisée, la position de début de déformation de la progressivité est connue par l'intermédiaire de révolution de la variable d_p_rat.

Si lors du déplacement en cours, une détection de fin de zone de jeu n'à pas été réalisée, en pourra prendre comme référence provisoire la déformation estimée, initiale, en début de déplacement.

Si cette déformation augmente, on détecte l'atteinte d'un effort de charge par la déformation de la raideur relativement à cette référence. On pourra considérer une valeur faible du seuil que l'effort de charge ne doit pas franchir afin de garantir que la charge maximale ne soit pas dépassée. La position de l'atteinte de l'effort de charge maximal sera alors détecté lors de l'actionnement suivant, lorsque la position de fin de zone de jeu aura été détectée tel que décrit précédemment.

Le dispositif de commande d'un actionneur et le procédé de commande associé permettent de déterminer les zones de jeu d'un actionneur. Il est ainsi possible de prendre en compte l'usure dudit actionneur afin d'assurer un fonctionnement optimal dudit actionneur tout au long de sa vie. Il est également possible de déterminer une défaillance de l'actionneur par l'impossibilité de déterminer les limites des zones de jeu.

## Revendications

1. Dispositif de commande d'un actionneur comprenant un moteur (1) relié à un arbre (2) supportant une entrée de progressivité (3) et un élément d'interface (5), **caractérisé par le fait qu'**il comprend un dispositif de détermination (20) d'une variable de rapport de vitesse, un moyen de de lit variable de rapport de vitesse à au moins un seuil, un moyen de détermination de position de l'entrée de progressivité (3), une moyen de détermination de position de l'élément d'interface (5), un moyen de détermination du sens de déplacement et un moyen de mémorisation de la position déterminée en fonction du signal reçu du moyen de comparaison est du sens de déplacement.

2. Dispositif de commande selon la revendication 1, comprenant un premier moyen de dérivation et de saturation recevant en entrée un signal provenant du moyen de détermination de position de l'entrée progressivité (3), un deuxième moyen (27) de dérivation et de saturation recevant en entrée un signal provenant du moyen de détermination de position de l'élément d'interface, (5) et un deuxième moyen (33) de filtrage au premier ordre apte à déterminer la variable de rapport de vitesse.

3. Dispositif de commande selon la revendication 2, comprenant une mémoire (40), un moyen (36) de filtrage au premier ordre connecté en sortie du premier moyen (22) de dérivation et de saturation, et un comparateur (42) apte à émettre une valeur logique en fonction de la comparaison entre la valeur mémorisée dans la première mémoire (40) et une valeur issue de la sortie du moyen (36) de filtrage au premier ordre.

4. Dispositif de commande selon la revendication 3, comprenant un moyen (46) de comparaison conditionnelle et une deuxième mémoire (44), apte à émettre en sortie la valeur comprise dans la deuxième mémoire (44) ou la valeur issue du deuxième moyen (33) de filtrage au premier ordre en fonction de la valeur logique reçue du comparateur (42).

5. Dispositif de commande selon la revendication 2, comprenant un premier moyen (24) de saturation, un deuxième moyen (31) de saturation et un diviseur (29) le diviseur (29) recevant sur une première entrée un signal transitant par le premier moyen (24) de saturation et provenant du premier moyen (22) de dérivation et de saturation et sur une deuxième entrée un signal provenant du deuxième moyen (27) de dérivation et de saturation, le diviseur (29) émettant un signal de sortie fonction du rapport du deuxième signal d'entrée par le premier signal d'entrée, le signal de sortie étant émis à destination du deuxième moyen (33) de filtrage au ordre en transitant par un deuxième moyen (31) de saturation.

6. Disposition de commande selon la revendication 3, comprenant un moyen de calcul (38) apte à déterminer la valeur absolue du signal provenant du moyen (36) de filtrage au premier ordre et apte à émettre un signal à destination du comparateur (42).

7. Procédé de commande d'un actionneur comprenant un moteur (1) relié à un arbre (2) supportant une entrée de progressivité (3) et un élément d'interface (5), **caractérisé par le fait qu'**il comprend des étapes au cours desquelles:

   on détermine un signal de position de l'entrer de progressivité (3),
   on détermine un signal de position de l'élément d'interface (5),
   on détermine le sens de déplacement,
   on détermine si les positions courantes correspondent à une butée, et
   on mémorise les positions courantes et le sens de déplacement.

8. Procédé de commande selon la revendication 7, dans lequel on détermine si les positions courantes correspondent à une butée en réalisant des étapes au cours desquelles:

   on détermine la variable de rapport de vitesse, et
   on détermine une valeur logique vraie si la variable de rapport de vitesse est supérieure à un seuil.

9. Procède de commande selon la revendication 7 ou 3, dans lequel on change de sens de déplacement si une position de buttée a été déterminée pour le sens de déplacement courant.

10. Procède de commande selon l'une des revendications 7 à 9, dans lequel on détermine un défaut de l'actionneur si aucune position de butée n'est déterminée après deux allers retours.

EP 2 249 065 A1

FIG.1a

9

## FIG.1b

## FIG.1c

## FIG.1d

# FIG.2

FIG.3

**EP 2 249 065 A1**

Europäisches
Patentamt

European
Patent Office

Office européen
des brevets

# RAPPORT DE RECHERCHE EUROPEENNE

Numéro de la demande

EP 10 30 5427

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 853 035 A (VALEO EMBRAYAGES [FR]) 1 octobre 2004 (2004-10-01) * le document en entier * ----- | 1-10 | INV. F16H61/32 G05B13/02 G05B19/18 F16H61/02 |
| A | FR 2 747 170 A (LUK GETRIEBE SYSTEME GMBH [DE]) 10 octobre 1997 (1997-10-10) * page 14, ligne 13-26 * * page 15, ligne 25-34 * * page 17, ligne 19 - page 24, ligne 7 * * page 25, ligne 3-28 * * page 28, ligne 8 - page 31, ligne 21 * * page 33, ligne 10 - page 39, ligne 28 * * page 41, ligne 16 - page 42, ligne 26 * * page 48, ligne 1 - page 51, ligne 25 * * page 59, ligne 1-30 * * page 61, ligne 20 - page 62, ligne 2 * * page 67, ligne 9 - page 72, ligne 33 * * figures 5,6a,6c,7a,7b,9,12a,12b,12c,21a-26b * ----- | 1-10 | |
| A | FR 2 814 250 A (MANNESMANN SACHS AG [DE]) 22 mars 2002 (2002-03-22) * le document en entier * ----- | 1-10 | DOMAINES TECHNIQUES RECHERCHES (IPC) G05B F16H |

Le présent rapport a été établi pour toutes les revendications

| Lieu de la recherche | Date d'achèvement de la recherche | Examinateur |
|---|---|---|
| Munich | 28 juillet 2010 | Postemer, Patricia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

13

**ANNEXE AU RAPPORT DE RECHERCHE EUROPEENNE
RELATIF A LA DEMANDE DE BREVET EUROPEEN NO.**

EP 10 30 5427

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-07-2010

| Document brevet cité au rapport de recherche | | Date de publication | Membre(s) de la famille de brevet(s) | | Date de publication |
|---|---|---|---|---|---|
| FR 2853035 | A | 01-10-2004 | AT | 333611 T | 15-08-2006 |
| | | | DE | 602004001584 T2 | 08-03-2007 |
| | | | EP | 1608897 A1 | 28-12-2005 |
| | | | WO | 2004088177 A1 | 14-10-2004 |
| FR 2747170 | A | 10-10-1997 | BR | 9701622 A | 03-11-1998 |
| | | | CN | 1166419 A | 03-12-1997 |
| | | | DE | 19713423 A1 | 06-11-1997 |
| | | | ES | 2149653 A1 | 01-11-2000 |
| | | | GB | 2311829 A | 08-10-1997 |
| | | | IT | 1290519 B1 | 04-12-1998 |
| | | | JP | 10030723 A | 03-02-1998 |
| | | | US | 6003649 A | 21-12-1999 |
| FR 2814250 | A | 22-03-2002 | DE | 10045730 A1 | 25-04-2002 |

EPO FORM P0460

Pour tout renseignement concernant cette annexe : voir Journal Officiel de l'Office européen des brevets, No.12/82

**EP 2 249 065 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2813935
- FR 2820484
- FR 2833331
- FR 2861153

- FR 2861154
- US 4449416 A
- US 4498350 A
- WO 0102758 A